## Europäisches Patentamt
## European Patent Office
## Office européen des brevets

(11) Veröffentlichungsnummer: **0 180 866 B1**

(12) **EUROPÄISCHE PATENTSCHRIFT**

(45) Veröffentlichungstag der Patentschrift: **19.12.90**

(21) Anmeldenummer: **85113557.4**

(22) Anmeldetag: **24.10.85**

(51) Int. Cl.⁵: **B 23 Q 3/18**

(54) **Einrichtung zur Halterung eines Gegenstandes.**

(30) Priorität: **01.11.84 CH 5270/84**

(43) Veröffentlichungstag der Anmeldung:
**14.05.86 Patentblatt 86/20**

(45) Bekanntmachung des Hinweises auf die
Patenterteilung:
**19.12.90 Patentblatt 90/51**

(84) Benannte Vertragsstaaten:
**CH DE FR GB IT LI NL SE**

(56) Entgegenhaltungen:
**DE-A-2 252 137**
**FR-A-2 245 447**
**US-A-3 054 333**
**US-A-4 148 400**

(73) Patentinhaber: **Büchler B-SET AG**
**Wiler Strasse 98**
**CH-9230 Flawil (CH)**

(72) Erfinder: **Buechler, René**
**Weidweg 2**
**CH-9245 Sonnental SG (CH)**

(74) Vertreter: **EGLI-EUROPEAN PATENT**
**ATTORNEYS**
**Horneggstrasse 4**
**CH-8008 Zürich (CH)**

Courier Press, Leamington Spa, England.

## Beschreibung

Die vorliegende Erfindung betrifft eine Einrichtung zur Halterung eines Gegenstandes, mit einer Palette, auf der der Gegenstand, wie z.B. ein Werkstück oder ein Werkzeug, angeordnet sein kann, gemäß dem Oberbegriff von Anspruch 1.

Werkstücke müssen oft mehreren Bearbeitungsgängen unterworfen werden, bis sie ein fertiges Produkt darstellen. Die genannten Bearbeitungsgänge können beispielsweise Fräsen, Bohren, Schleifen und Elektroerodieren sein. Jeder der Bearbeitungsgänge wird durch eine Maschine entsprechender Art durchgeführt. Dies bedeutet, dass das Werkstück in die jeweilige Maschine zunächst eingebracht werden muss und dass es dann dort aufgespannt und präzise eingestellt werden muss, bevor die Bearbeitung desselben beginnen kann. Nach der Beendigung des jeweiligen Bearbeitungsprozesses muss das Werkstück der Maschine wieder entnommen werden. Unter Umständen muss auch das Werkzeug in der jeweiligen Maschine gewechselt werden.

Die Uebertragung eines Werkstückes von einer Maschine zu einer weiteren Maschine und die Einstellung desselben in der jeweiligen Maschine nimmt eine bestimmte Zeitspanne in Anspruch. Der Wechsel der Werkzeuge in den Maschinen beansprucht für sich auch eine gewisse Zeitspanne. Diese Zeitspannen summieren sich bei der Bearbeitung eines Werkstückes durch mehrere Bearbeitungsmaschinen, so dass sich daraus eine ungunstige Ausnützung einer solchen Maschinenanlage ergibt.

Die Summe der Stillstandszeiten der Maschinen in einer Maschinenanlage für die Bearbeitung von kleinen bis mittelgrossen Mengen von Werkstükken kann, wie bereits angedeutet worden ist, einen ganz beträchtlichen Wert erreichen. Seit langer Zeit besteht somit das Bedürfnis, die Behandlung von kleinen bis mittelgrossen Mengen von Werkstücken rationeller und genauer zu gestalten.

Beispielsweise ist es bereits bekannt, das jeweilige Werkstück auf einem Voreinstellplatz auf einer Unterlage aufzuspannen und einzustellen, wonach diese Unterlage samt dem Werkstück in eine Bearbeitungsmaschine übertragen wird. Diese Methode wird bei der Bearbeitung von Werkstücken angewendet, bei welchen ausserordentlich kleine mechanische Kräfte auf das Werkstück einwirken, wie z.B. bei der Drahterosion. Bei Grobbearbeitung, wie z.B. beim Fräsen, Bohren usw., wirken auf das Werkstück dagegen grosse mechanische Kräfte ein, so dass die bekannte Palette für die Grobbearbeitung nicht geeignet ist. Zur Grobbearbeitung mussten die Werkstücke bis jetzt entweder auf einer anderen Palette oder erst in der Bearbeitungsmaschine positioniert werden. Die Genauigkeit der Positionierung in einer Bearbeitungsmaschine wird zudem durch Späne oder andersartigen Schmutz beeinträchtigt, die bei der Bearbeitung von vorangehenden Werkstücken in der jeweiligen Maschine entstanden sind.

Es sind rationelle Losungen für die Grobbearbeitung bekannt. Für eine Feinbearbeitung genügen sie aber der geforderten Genauigkeit im Mikrobereich nicht. Auch unter den günstigen Voraussetzungen mit manueller Beladung der Bearbeitungsmaschine mit Werkstücken, bleibt die Genauigkeit bezüglich eines gleichbleibenden Referenzpunktes in erwähntem Mikrobereich nicht konstant.

Die Aufgabe der vorliegenden Erfindung ist eine Einrichtung zu schaffen, die eine speditive Bearbeitung eines Werkstückes durch mehrere Bearbeitungsmaschinen ermöglicht, wobei die Bearbeitung mit einer im Bereich eines Hundertstels von Millimetern, d.h. in einem Mikro- bzw. Mikronbereich liegenden Genauigkeit in den beiden senkrecht zueinander stehenden Hauptrichtungen einer Ebene erfolgen soll. Eine solche Bearbeitung soll zudem unabhängig davon erfolgen, ob die Anzahl der Werkstücke klein -Einzelteilbearbeitung- oder gross ist, und dies zudem noch unabhängig davon, wie schnell und wie oft die Uebertragung des Werkstückes von einer Bearbeitungsmaschine zu einer weiteren erfolgt.

Diese Aufgabe wird bei der Einrichtung der eingangs genannten Art erfindungsgemäss so gelöst, wie dies im kennzeichnenden Teil des Anspruchs 1 definiert ist.

Auf der erfindungsgemäss ausgebildeten Palette kann ein Werkstück befestigt und mit dieser, gemäss den Befehlen der numerischen Steuerung, verschiedenen Werkzeugmaschinen nacheinander zugeführt werden. Das Werkstück wird auf dem Voreinstellplatz auf der Palette aufgespannt und nach einem Referenzpunkt eingestellt und danach läuft diese Palette mit dem Werkstück durch alle Bearbeitungsstationen des Werkstückes mit, unabhängig davon, wie gross die auf das Werkstück einwirkenden mechanischen Kräfte sind. Die Palette ist so ausgebildet, dass auch bei schnellem Wechsel der Bearbeitungsmaschinen die Palette mit dem jeweiligen Werkstück in diesen mit einer im Mikrobereich liegenden Genauigkeit positioniert werden kann. Mit einer solchen Palette können den Maschinen auch die jeweils erforderlichen Werkzeuge, wie z.B. Elektroden, Schleifscheiben. Messgeräte usw. zugeführt werden, wobei diese Werkzeuge dann gemäss den Anweisungen der numerischen Steuerung in der betreffenden Maschine eingespannt werden können.

Die erfindungsgemäss ausgebildete Palette ist derart ausgefürt, dass sie samt dem auf dieser befestigten und positionierten Gegenstand in Maschinen nicht nur für die feinste sondern auch für grobe Bearbeitung von Werkstücken aufgestellt sein kann.

Nachstehend werden Ausführungsbeispiele der vorliegenden Erfindung anhand der beiliegenden Zeichnungen näher erläutert. Es zeigt:

Fig. 1 perspektivisch eine erste Ausführungsform der vorliegenden Einrichtung mit einer Palette und mit einer Unterlage, zwischen welchen sich zylinderförmige Glieder befinden,

Fig. 2 einen Schnitt I—I durch die Palette nach Fig. 1,

Fig. 3 perspektivisch die Palette aus Fig. 1, die auf einer Unterlage ruht,

Fig. 4 in einem achsialen Längsschnitt eine der Ausführungsformen des zylinderförmigen Gliedes aus den Fig. 1 bis 3,

Fig. 5 einen Schnitt V—V durch das Glied aus Fig. 4,

Fig. 6 perspektivisch die Palette der Einrichtung nach Fig. 1, wobei in der Palette ein Schraubstock integriert ist und

Fig. 7 perspektivisch und teilweise in einem vertikalen Schnitt eine weitere Ausführungsform der vorliegenden Einrichtung, bei der die Palette in einer flachen Ausnehmung der Unterlage ruht,

Fig. 8 in einem vertikalen Schnitt die Palette aus Fig. 1, die auf einem Balken sitzt, wobei diese beiden Einrichtungsteile Kanäle zur Führung einer Spülflüssigkeit aufweisen,

Fig. 9 in Draufsicht die Palette nach Fig. 8,

Fig. 10 in Draufsicht eine Palette, auf der vier weitere und kleinere Paletten angeordnet sind,

Fig. 11 eine Palette, deren Oberseite zwei Balken zur Führung der kleineren Paletten nach Fig. 10 aufweist.

Fig. 12 perspektivisch eine Palette. deren Unterseite zwei Ausnehmungen aufweist und die unter der Zwischenlage von zwei zylinderförmigen Traggliedern auf einer plattentförmigen Unterlage ruht,

Fig. 13 perspektivisch die Palette nach Fig. 12, die durch zwei Balken geführt ist,

Fig. 14 perspektivisch die Einrichtung nach Fig. 1, bei der die Unterlage mit einer flachen Ausnehmung versehen ist, wobei sich in dieser Ausnehmung ein Abschnitt des profilierten Teiles eines Führungsbalkens befindet,

FIG. 15 eine Darstellung entsprechend Fig. 5, wobei in dieser Darstellung die Palette auf dem starren Abschnitt des Traggliedes aufliegt,

Fig. 16 eine rückwärtige Ansicht der Spülleiste aus Fig. 1,

Fig. 17 einen vertikalen Schnitt XVII—XVII durch die Spülleiste aus Fig. 16,

Fig. 18 eine weitere Ausführungsmöglichkeit der Palette mit profilierten Vorsprüngen zur Halterung entweder von weiteren Paletten oder zur Halterung von Hilfsvorrichtungen,

Fig. 19 perspektivisch eine Ausführungsform der Palette, die zur Halterung von stangenförmigen Gegenständen geeignet ist und,

Fig. 20 einen Ausschnitt aus der Palette nach Fig. 19.

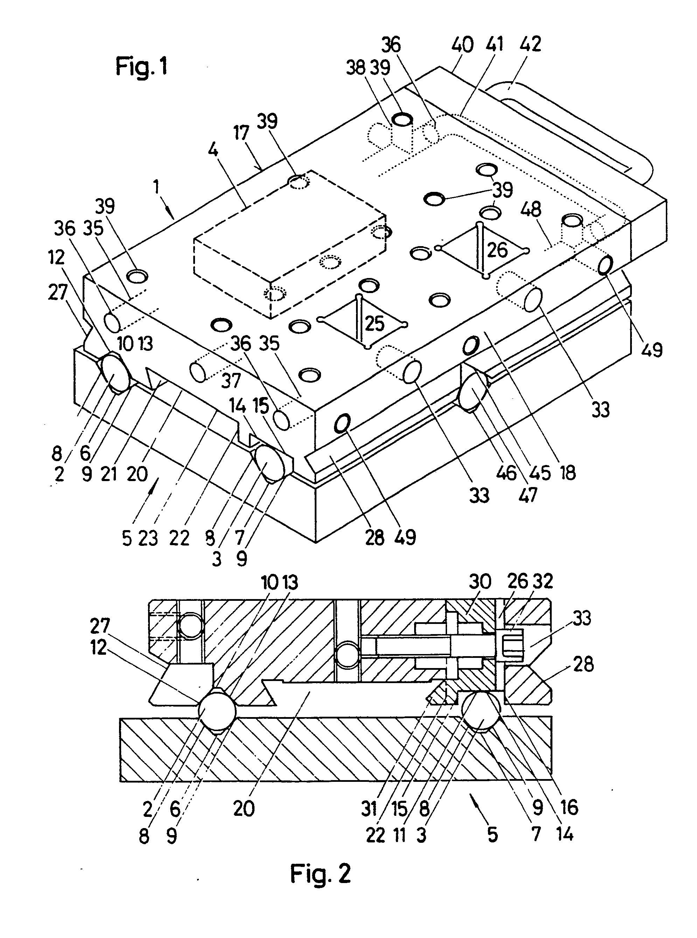

Die in den Fig. 1 bis 3 dargestellte Einrichtung zur Halterung eines Gegenstandes, wie z.B. eines Werkstuckes, eines Werkzeuges oder dgl., enthält eine Palette 1, die über Tragglieder 2 und 3 auf einer Unterlage 5 ruht.

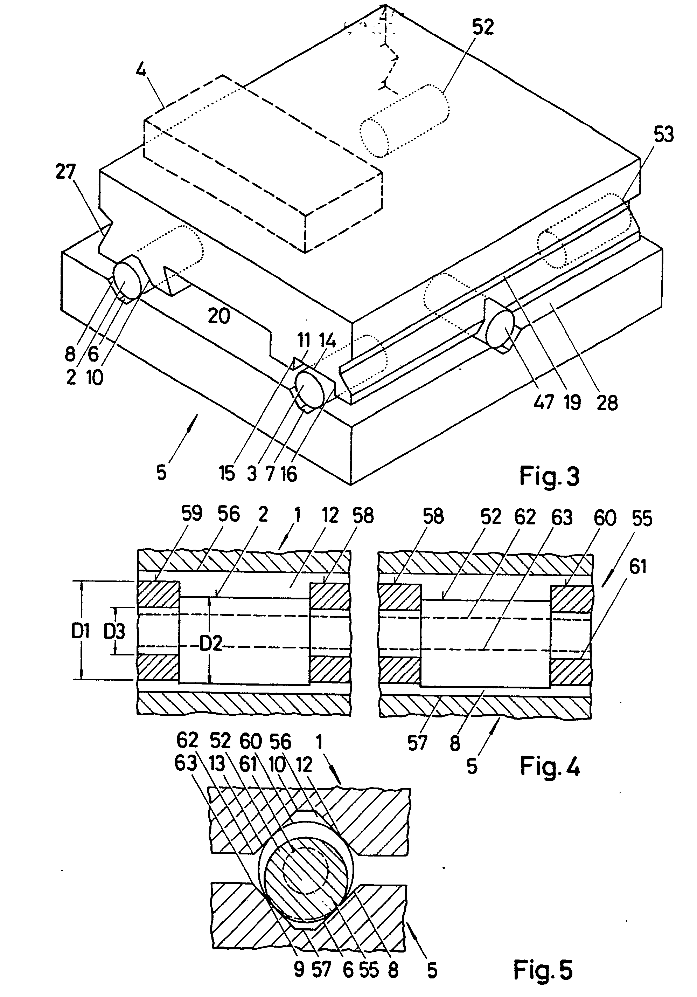

Die genannte Unterlage 5 ist als eine Platte ausgebildet und in der Oberseite dieser Platte 5 sind sich in einem Abstand voneinander befindliche Rinnen 6 und 7 ausgeführt. Wenn die Länge der Unterlage 5 grösser ist als die Breite derselben (Fig. 3), dann erstrecken sich die Rinnen 6 und 7 über die gesamte Länge der Unterlage 5. Der Querschnitt der dargestellten Rinnen 6 und 7 ist im wesentlichen trapezförmig. Er kann jedoch auch bloss dreieckförmig sein.

Die Tragglieder 2 und 3 weisen im wesentlichen einen zylinderförmigen Querschnitt auf, wobei der Durchmesser der Tragglieder 2 und 3 derart gewählt ist, dass die Oberfläche derselben nur oder vor allem die geneigt verlaufenden Seitenflächen 8 und 9 der trapezförmigen bzw. dreieckförmigen Rinnen 6 und 7 (Fig. 2 und 3) berührt.

Die Palette 1 ist ebenfalls im wesentlichen plattenförmig und deren Unterseite ist auch mit zwei Rinnen 10 und 11 versehen, die nebeneinander liegen und parallel zueinander verlaufen. Die Rinnen 6 und 7 in der Unterlage 5 liegen den Rinnen 10 und 11 in der Palette 1 gegenüber. Die in den Fig. 1 bis 3 links dargestellte Rinne 10 der Palette 1 hat, gleich wie die Rinnen 6 und 7 in der Unterlage 5, einen trapez- bzw. dreieckförmigen Querschnitt, wobei das sich in den linken Rinnen 6 und 10 befindliche Tragglied 2 ebenfalls nur oder vor allem auf den geneigten Seitenflächen 12 und 13 der ersten oberen Rinne 10 aufliegt. Der Querschnitt der rechts liegenden, zweiten oberen Rinne 11 in der Unterseite der Palette 1 ist dagegen rechteckig. Diese Rinne 11 ist weniger tief als die erste obere Rinne 10 aber dafür ist sie breiter als die erste Rinne 10. Die zweite obere Rinne 11 ist deswegen weniger tief als die erste obere Rinne 10, weil das sich in dieser Rinne 11 befindliche Tragglied 3 nur auf der Sohle 14 dieser zweiten Rinne 11 aufliegen soll. Die Sohle 14 dieser Rinne 11 ist so breit ausgeführt, dass zwischen dem Tragglied 3 und den Seitenwänden 15 und 16 (Fig. 3) der zweiten oberen Rinne 11 freie Raume vorhanden sind.

Die Palette 1 wird durch das erste Tragglied 2 nicht nur getragen sondern auch in bezug auf die Unterlage 5 seitlich geführt. Denn dieses erste Tragglied 2, das sich in den ersten Rinnen 6 und 10 befindet, liegt auf den geneigten Seitenflächen dieser Rinnen 6 und 10 auf. Dadurch ist die Lage der Palette 1 senkrecht zur Längsrichtung der Rinnen 6, 7, 10 und 11 definiert. Das zweite Tragglied 3 erfüllt eigentlich nur die tragende Funktion.

Einander gegenüberliegende Seitenwände 17 und 18 der Palette 1 sind mit Furchen 27 und 28 versehen, deren Zweck im nachstehenden näher beschrieben ist. Der Querschnitt dieser Furchen 27 und 28 kann einfach V-förmig sein, wie dies aus Fig. 1 ersichtlich ist. Diese Furchen 27 und 28 können jedoch auch besonders geformte Querschnitte aufweisen, die in einer europäischen Patentanmeldung Nr. 0,116,260 desselben Anmelders im Einzelnen beschrieben sind. Schematisch sind solche Furchen 27 und 28 in Fig. 3 dargestellt.

Die untere Seite der Palette 1 ist mit einer breiten, flachen und sich in einer Richtung erstreckenden Ausnehmung 20 ausgeführt, die zwischen den genannten Rinnen 10 und 11 liegt und sich parallel zu diesen erstreckt. Eine nähere Beschreibung der Form dieser Ausnehmung 20 befindet sich ebenfalls in der bereits genannten europäischen Patentanmeldung Nr. 0116260 desselben Anmelders. Eine Seitenwand 21 dieser Ausnehmung 20 ist unterschnitten während die gegenüberliegende Seitenwand 22 dieser Ausnehmung 20 etwa rechtwinklig zur Sohle 23 der Ausnehmung 20 verläuft.

Aus Fig. 1 ist ersichtlich, dass die Palette 1 oben und unten offene Hohlräume 25 und 26 aufweist, wobei der in Fig. 2 dargestellte Schnitt I—I durch den zweiten dieser Hohlräume geführt ist. Im zweiten Hohlraum 26 befindet sich eine Klinke 30, deren untere Partie eine Nase 31 aufweist, wobei diese Nase 31 aus der rechtwinklig stehenden Seitenwand 22 in die Ausnehmung 20 hervorsteht. Die Klinke 30 ist mit Hilfe einer Schraube 32 an Ort und Stelle gehalten deren Kopf mit Innensechskant in einer seitlichen Bohrung 33 der Palette 1 liegt. Der erste Hohlraum 25 kann selbstverständlich auch eine Klinke 30 enthalten, Verschiedene Ausführungen der genannten Klinke 30 sind in der bereits erwähnten europäischen Patentanmeldung desselben Anmelders im Einzelnen ebenfalls beschrieben.

Die Palette 1 ist mit horizontal verlaufenden Kanälen 35 versehen, die samt ihren Mündungen 36 in der Frontwand 37 der Palette 1 in Fig. 1 bloss angedeutet sind. An diese horizontalen Kanäle 35 schliessen sich in der Palette 1 vertikal verlaufende Kanäle 38 an, die mit einer Mündung 39 in der Oberseite der Palette 1 enden. Die Mündungen 39 in der Oberfläche der Palette 1 sind mit Innengewinde versehen. Dies ermöglicht, an diese Mündungen 39 Schläuche zur Führung der Spülflüssigkeit zum Behandlungsbereich des Werkstückes anzuschliessen oder diese Oeffnungen 96 mit Schrauben (nicht dargestellt) zu schliessen, wenn der entsprechende vertikale Kanal 38 nicht benutzt werden soll, An die Mündungen 39 können sich jedoch auch Durchgangsbohrungen in den Werkstücken anschliessen. durch welche die Spülflüssigkeit zur Behandlungsstelle geführt werden kann.

Der hinteren Frontwand der Palette 1 ist eine Spülleiste 40 zugeordnet, in der wenigstens ein Umlenkkanal 41 ausgeführt ist. Diese Spülleiste 40 ist in einer bekannten Weise, beispielsweise mit Hilfe von Schrauben (nicht dargestellt), an der Palette 1 befestigt. Der Umlenkkanal 41 verläuft etwa U-förmig und in horizontaler Richtung, so dass die Mündungen eines solchen Kanals 41 den Mündungen 36 der horizontalen Kanäle 35 in der Palette 1 flüssigkeitsdicht zugeordnet werden können. Man kann dann beispielsweise den linken horizontalen Kanal 35 in der Palette 1 zur Zuführung einer Flüssigkeit in die vorliegende Einrichtung benützen und von diesem Kanal 35 kann die Flüssigkeit dann mit Hilfe der Spülleiste 40 weiteren Kanälen 35 in der Palette 1 zugeführt werden. Der an der Spülleiste 40 angebrachte Griff 42 kann zur Handhabung der ganzen Palette 1 ausgenützt werden. An die genannten horizontalen Kanäle 35 in der Palette 1 schliessen sich kurze und ebenfalls horizontal verlaufende Kanäle 48 an, deren Mündungen 49 in der jeweiligen Seitenwand 17 bzw, 18 der Palette 1 liegen. Auch die Mündungen 49 solcher Kanäle 48 sind mit dem bereits besprochenen Innengewinde versehen.

Der Einsatz der vorliegenden Einrichtung erfolgt in der Regel so, dass eine der Unterlagen 5 sich im Arbeitsbereich der jeweiligen Bearbeitungsmaschine permanent befindet. Auf diese Unterlage 5 wird die Palette 1 aufgesetzt, auf der der durch mehrere Bearbeitungsmaschinen zu behandelnde Gegenstand positioniert ist. Es ist bereits gesagt worden, dass die seitliche Lage der Palette 1 in bezug auf die Unterlage 5 durch das linke Tragglied 2 definiert ist. Um die Lage der Palette 1 gegenüber der Unterlage 5 auch in der Längsrichtung der Rinnen 6, 7, 10 und 11 schnell und präzise erreichen zu können, ist die Unterseite der Palette 1 und die Oberseite der Unterlage 5 mit je einer weiteren Rinne 45 und 46 versehen. Diese weiteren Rinnen 45 und 46 verlaufen quer zur Längsrichtung der früher besprochenen Rinnen 6, 7, 10 und 11. Die beiden Querrinnen 45 und 46 haben einen trapezförmigen bzw. dreieckförmigen Querschnitt und in diesen liegt ein im wesentlichen zylinderförmiges Glied 47. Die Oberfläche dieses zylinderförmigen Gliedes 47 bzw. Bolzens liegt ebenfalls auf den geneigten Seitenflächen der Querrinnen 45 und 46 auf, so dass dadurch die Lage der Palette 1 in bezug auf die Unterlage 5 auch in der genannten Längsrichtung genau und schnell erreicht werden kann.

In Fig. 1 ist ein Gegenstand 4 strichpunktiert angedeutet, der auf der Oberseite der Palette 1 angeordnet ist. Dieser Gegenstand 4 kann ein Werkstück, ein Werkzeug usw. sein. Ein Werkstück 4 kann auf der Palette 1 beispielsweise mit Hilfe von Klemmen (nicht dargestellt) befestigt sein, deren Schrauben in den bereits besprochenen und mit Innengewinde versehenen Mündungen 39 bzw. 49 der Kanale 38 bzw. 48 eingeschraubt sind.

Die Glieder 2, 3 und 47 können zylinderförmig oder flach. starr oder nachgiebig und aus Stahl. Kunststoff. wie z.B. aus Nylon, usw. sein. Ein solches Glied kann einstückig sein oder es kann aus mehreren Teilen bestehen.

Die in den Fig. 1 bis 3 gezeigten Tragglieder 2 und 3 sowie das Querglied 47 sind zylinderförmig, einstückig und sie bestehen aus einem starren oder wenigstens nicht leicht zusammendrückbaren Material, wie z.B aus Stahl. Der Kontakt zwischen solchen Gliedern 2, 3, und 47 und der jeweiligen Wand 12, 13 bzw. 14, 15, 16 usw. der Rinnen 6, 7, 10, 11, 45 und 46 ist linienförmig. Dies bedeutet, dass die Kontaktfläche zwischen den Gliedern und der jeweiligen Wand ausreichend gross ist, damit sie ihre Form durch mehrmalige Benützung der genannten Glieder nicht ändert. und zwar auch dann, wenn die Glieder oder/und die Rinnen schlagartiger Beanspruchung ausgesetzt werden. Zudem wird allfälliger Schmutz aus dem linienförmig verlaufenden Berührungsbereich zwischen dem jeweiligen Glied und der Wand in den diesem Berührungsbereich benachbarten Bereich der Rinnenwand verdrängt.

Die genannten Glieder können unterschiedliche Längen aufweisen. In Fig, 3 ist eine Ausführungsform der vorliegenden Einrichtung dargestellt, bei der die genannten Tragglieder 2 und 3 nur kurz sind, wobei sie sich in einem der Endbereiche der Längsrinnen 6 und 7 bzw. 10 und 11 befinden. Im gegenüberliegenden Endbereich dieser Rinnen liegen weitere und gleich ausgebildete Tragglieder 52 und 53. Im freien Raum zwischen den vorderen Traggliedern 2 und 3 und den hinteren Traggliedern 52 und 53 kann dann der bereits erwähnte Bolzen 47 liegen. Dadurch ist die Lage der Palette 1 in bezug auf die Unterlage 5 sowohl in der X- als auch in der Y-Richtung einer horizontalen Ebene eindeutig definiert.

Im Prinzip ist es auch möglich, die Palette 1 in bezug auf die Unterlage in eine geneigte Lage zu bringen und das auf der Palette positionierte Werkstück in dieser Lage zu bearbeiten. Hierzu bedarf es allerdings eines entsprechend geformten Zwischenstückes, das in die Rinnen einer der Seiten der Einrichtung eingelegt wird und somit eines der Tragglieder ersetzt.

Die genannten Glieder können jedoch, wie bereits erwähnt worden ist, aus mehreren Teilen bestehen. Ein solches Glied 55 ist in den Fig. 4 und 5 dargestellt. Dieses Glied 55 befindet sich im dargestellten Beispiel in den Rinnen 6 und 10 der Unterlage 5 bzw. der Palette 1 der Einrichtung nach Fig. 1. Die obere Rinne 10 weist die bereits genannten Seitenwände 12 und 13 auf, zwischen welchen sich der Boden 56 der oberen Rinnen 10 erstreckt. Die untere Rinne 6 weist die ebenfalls bereits genannten Seitenwände 8 und 9 auf, zwischen welchen sich der Boden 57 der unteren Rinne 6 erstreckt. Mit 62 bzw. 63 sind jene Kanten bezeichnet, mit welchen die Seitenwände 8 bzw. 12 der Rinnen 6 bzw. 10 in der Oberfläche der Unterlage 5 bzw. der Palette 1 enden.

Das kombinierte Glied 55 enthält im dargestellten Fall zylinderförmige Abschnitte 2 und 52, die aus einem starren Material sind. Diesen starren Abschnitten 2 und 52 sind beidseitig weitere zylinderförmige Abschnitte 58, 59 und 60 stumpf zugeordnet, die aus einem nachgiebigen Material. wie z.B. aus Nylon sind. Im dargestellten Beispiel sind die nachgiebigen Abschnitte 58 bis 60 rohrförmig ausgeführt. Die Innenwand der rohrförmigen Abschnitte 58, 59 und 60 ist mit 61 bezeichnet. Der äussere Durchmesser D1 der nachgiebigen Abschnitte 58, 59 und 60 ist grösser als der Durchmesser D2 der starren Abschnitte 2 bzw. 52. Der innere Durchmesser D3 der rohrförmigen nachgiebigen Abschnitte 58, 59 und 60 ist kleiner als der Durchmesser D2 der starren Abschnitte 2 und 52. Fig. 4 und 5 zeigen die vorliegende Einrichtung in einem einer der Bearbeitungsoperationen des Werkstückes 4 vorangehenden Zustand. In diesem Zustand liegt die Palette 1 auf den nachgiebigen Abschnitten 58, 59 und 60 des Traggliedes 55 auf.

Wenn die seitlichen nachgiebigen Abschnitte 59 und 60 lang genug ausgeführt sind, dann kann die Palette 1 entlang diesem Tragglied 55 und auf den nachgiebigen Abschnitten desselben gleitend bewegt werden. Sollte sich in den Rinnen oder auf dem Tragglied Schmutz befinden, dann wird dieser während der genannten gleitenden Bewegung der Palette 1 seitlich abgedrängt, so dass bei einem solchen Tragglied 55 eigentlich eine Selbstreinigung der Auflageflächen stattfindet. Dieser Selbstreinigungseffekt ist sehr wichtig für die Erzielung der erforderlichen Genauigkeit der Positionierung des Gegenstandes 4.

Wenn sich die Palette 1 im Behandlungsbereich einer der Bearbeitungsmaschinen befindet, dann kann auf diese ein vertikal abwärts gerichteter Druck mit Hilfe einer an sich bekannten Vorrichtung ausgeübt werden. Unter der Einwirkung eines solchen. Druckes deformieren sich die nachgiebigen Abschnitte 58, 59 und 60 so dass die Seitenwände der Rinnen 6 und 10 auf den starren und einen kleineren Durchmesser D2 aufweisenden Abschnitten 2 und 52 satt aufliegen. Der Durchmesser D2 dieser starren Abschnitte 2 und 52 ist so gewählt, dass der Gegenstand die zur Behandlung desselben erforderliche Lage in der Maschine einnimmt, wenn die Palette 1 auf den starren Abschnitten 2 und 52 des kombinierten Traggliedes 55 aufliegt. Auch der Querbolzen 47 kann in der beschriebenen Weise ausgeführt sein.

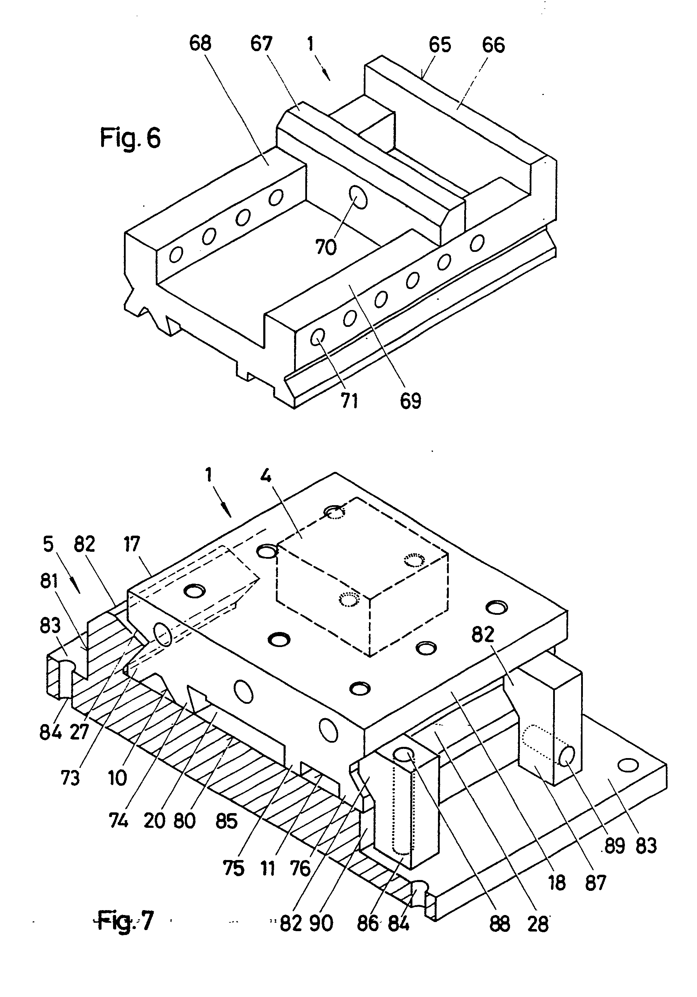

Fig. 6 zeigt perspektivisch eine weitere Ausführungsmöglichkeit der Palette 1. In der dargestellten Palette 1 ist ein Schraubstock 65 integriert, der eine feste Backe 66 und eine bewegliche Backe 67 aufweist. Die bewegliche Backe 67 ist zwischen zwei Wangen 68 und 69 geführt, die von der Oberseite der plattenförmigen Palette 1 empor ragen. Die Lage der beweglichen Backe 67 in bezug auf die feste Backe 66 kann mit Hilfe einer gewöhnlichen Gewindespindel (nicht dargestellt) erreicht werden, welche durch ein Gewindeloch 70 in der beweglichen Backe 67 hindurchgeht. Die Lage der beweglichen Backe 67 kann jedoch auch mit Hilfe eines Bolzens (nicht dargestellt) eingestellt werden, der durch Löcher 71 in den Wangen 68 und 69 sowie durch eine entsprechende und in der beweglichen Backe 67 ausgeführte Oeffnung (nicht dargestellt) hindurchgesteckt wird. In der Palette 1 können jedoch auch noch andere oder weitere Hilsvorrichtungen integriert sein.

In Fig. 7 ist eine weitere Ausführungsform der vorliegenden Erfindung dargestellt, in der die Palette über die genannten Vorsprünge auf der Unterlage 5 direkt aufliegt. Diese Ausführungsform der vorliegenden Einrichtung dient zur Halterung eines Gegenstandes, wenn dieser, einer Bearbeitungsoperation unterworfen werden soll, während welcher auf den Gegenstand grössere mechanische Kräfte einwirken sollen. Es kann sich beispielsweise um Fräsen, Bohren oder dgl. handeln. Die Berührungsfläche zwischen der Palette 1 und der Unterlage 5 ist bei dieser Ausführung wesentlich grösser als im Fall mit den Traggliedern. Die durch die Vorsprünge 73, 74, 75 und 76 vergrösserte Auflagefläche der Palette 1 ermöglicht, grössere Bearbeitungskräfte in vertikaler Richtung aufzunehmen.

Die Form der Unterlage 5 ist für die genannten Arten der Bearbeitung von Werkstücken entsprechend ausgeführt. Die Unterlage 5 ist in diesem Fall zwar auch plattenförmig, aber ihre Oberseite weist eine sich in einer Richtung erstreckende flache Ausnehmung 80 auf. Links in Fig. 7 ist die Unterlage mit einem Führungsteil 81 versehen, der eine in den Bereich der Ausnehmung 80 ragende Nase 82 hat. Diese Nase 82 steht mit der Furche 27 in der linken Seitenwand 17 der Palette in Eingriff. Der Führungsteil 81 kann entweder, wie mit voller Linie dargestellt, als ein kurzes Stück oder aber auch als eine mit einem Vorsprung 82 versehene Profilleiste (strichliert) ausgeführt sein, die sich in der Längsrichtung der Unterlage 5 erstreckt. Die Randpartien 83 der Unterlage 80 sind mit Oeffnungen 84 versehen, durch welche Schrauben (nicht dargestellt) hindurchgehen können, mit welchen die Unterlage 5 auf dem Maschinentisch 85 befestigt sein kann.

Die dem festen Führungsteil 81 gegenüberliegende Randpartie 83 der Unterlage ist mit beweglichen Anschlägen 86 und 87 versehen, deren Nasen 82 in die zweite Furche 28 in der Palette 1 eingreifen. Der vordere bewegliche Anschlag 86 weist eine vertikal verlaufende Bohrung 88 auf, durch welche eine in der Randpartie 83 der Unterlage einschraubbare Schraube (nicht dargestellt) hindurchgeht. Beim Lösen dieser Schraube kann der Anschlag 86 um diese Schraube gedreht und dadurch aus dem Eingriff mit der Furche 28 gebracht werden. Der zweite, hintere Anschlag 87 zeigt eine zweite Ausführungsmöglichkeit der Anschläge und er ist mit einer horizontalen Bohrung 89 versehen, durch welche eine Schraube hindurchgehen kann, die in der vertikalen Flanke 90 einer Abstufung in der Randpartie 83 der Unterlage 5 eingeschraubt ist. Ein so ausgeführter, beweglicher Anschlag 87 kann, nachdem die Schraube gelöst worden ist, durch Verschiebung in einer horizontalen Richtung ausser Eingriff mit der Furche 28 gebracht werden. Die beweglichen Anschläge 86 und 87 können jedoch auch als Teile einer mechanischen. elektrischen oder hydraulischen Vorrichtung sein, mit deren Hilfe sie in den und aus dem Eingriff mit der Furche 28 in der Palette 1 gebracht werden können.

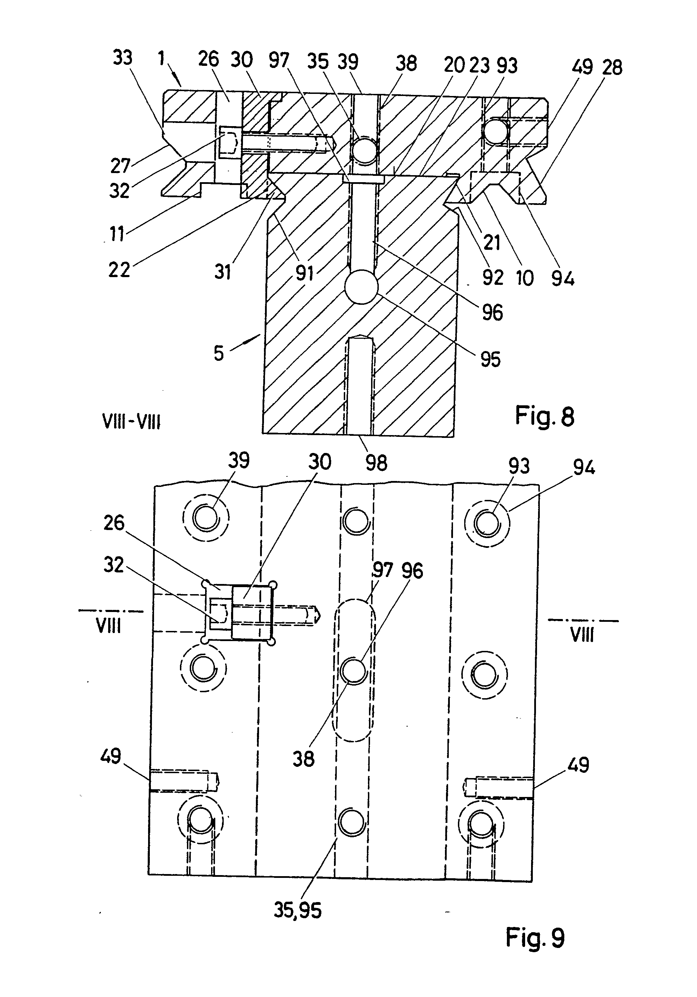

Schliesslich kann die Palette 1 mit Hilfe der Ausnehmung 20 in ihrer Unterseite mit einer Unterlage 5 in Eingriff stehen. In den Fig. 8 und 9 ist eine solche Kombination dargestellt. Die Unterlage 5 ist in diesem Fall balkenförmig und sie hat einen im wesentlichen rechteckigen Querschnitt. Obere Randpartien der Seitenwände der balkenförmigen Unterlage 5 weisen je eine Furche 91 bzw. 92 auf. Mit der rechts liegenden Furche 92 steht die unterschnittene Wand 21 der Ausnehmung 20 in Eingriff. In die gegenüberliegende Furche 91 der Unterlage 5 greift die Nase 31 der bereits besprochenen Klinke 30 ein, wobei diese Klinke 30 sich im bereits besprochenen Hohlraum 26 befindet.

Der Balken 5 ist mit horizontal verlaufenden Längskanälen 95 versehen, an die sich vertikale Kurzkanäle 96 anschliessen. Diese münden oben in eine flache Nut 97, die sich in der Bewegungsrichtung der Palette 1 in der Oberfläche des Balkens 5 erstreckt. Die Palette 1 ist mit den vertikalen Kanälen 38 ausgeführt, die im vorliegenden Fall bis zur Sohle 23 der Ausnehmung 20 verlängert sind. Die untere Mündung des verlängerten Querkanals 38 in der Palette 1 steht der Nut 97 im Balken 5 gegenüber, so dass die Spülflüssigkeit, die in den Längskanal 95 eingeführt wird, über die Nut 97 in die Palette 1 gelangen kann. Da bei der Bearbeitung eines Werkstückes die Lage dieses gegenüber dem Werkzeug entscheidend ist, kann es vorkommen, dass die Mündung des Querkanales 38 in der Palette 1 nicht oder wenigstens nicht genau der Mündung des Querkanals 96 im Balken 5 gegenüberliegt. Die Nut ermöglicht, dass die Spülflüssigkeit in die Palette 1 auch dann gelangt, wenn sich die Mündungen der genannten Querkanäle 38 und 96 nicht genau gegenüberstehen.

Die Unterseite des Balkens 5 ist mit Gewindelöchern 98 zur Aufnahme von Schrauben ausgeführt, mit deren Hilfe der Balken 5 auf dem Voreinstellplatz, auf dem Maschinentisch usw. befestigt sein kann. Bei der Verwendung eines Balkens als Unterlage für eine Palette 1 stehen die Randpartien der plattenförmigen Palette 1 vom Balken 5 seitlich ab. Dies bietet die Möglichkeit, das Werkstück 4 mit Hilfe von Schrauben im Bereich der Randpartien der Palette 1 zu befestigen. Zu diesem Zweck sind die Randpartien der Palette 1 mit durchgehenden Oeffnungen 93 versehen, die Gewinde aufweisen können. Im unteren Bereich weisen diese Oeffnungen 93 Erweiterungen 94 zur Aufnahme des Kopfes der jeweiligen Schraube auf. Solche Schrauben werden in einem entsprechenden Gewindeloch im Werkstück eingeschraubt. Wenn die Oeffnungen 93 in der Palette 1 mit Gewinde versehen sind, dann können die Befestigungsschrauben das Werkstück durchdringen und sie können dann von oben her in den Oeffnungen 93 eingeschraubt werden. Die übrigen in den Fig. 8 und 9 angeführten Bezugsziffern bezeichnen Teile der vorliegenden Einrichtung, die vorstehend bereits beschrieben worden sind.

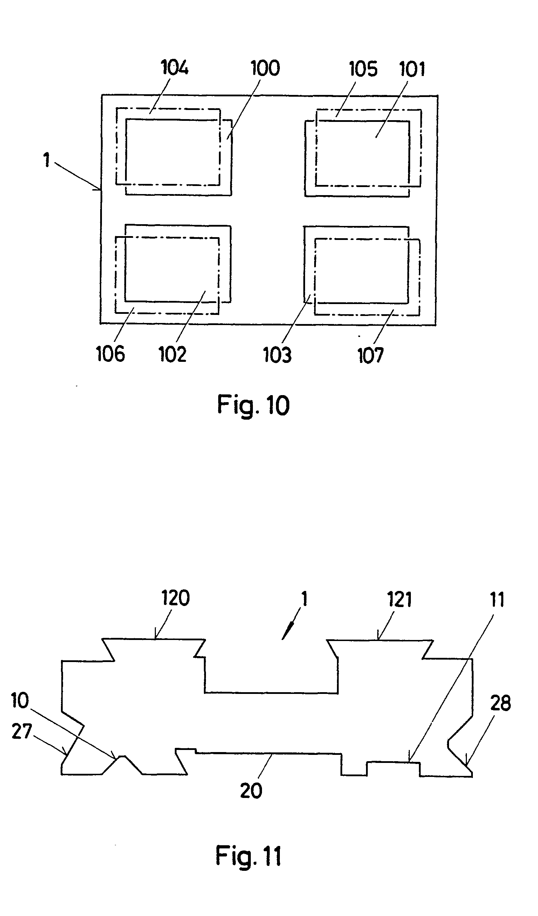

Fig. 10 zeigt eine weitere Ausführungsform der vorliegenden Einrichtung. Bei dieser Einrichtung sind neben der bereits genannten Palette 1 weitere und kleinere Paletten 101, 102, 103 und 104 vorhanden, die auf der grösseren Palette 1, beispielsweise gleich wie ein Werkstück, befestigt sein können. Auf solchen Hilfspaletten 100, 101, 102 und 103 können Werkstücke oder/und Werkzeuge befestigt sein. Es kann sich beispielsweise um vier Werkstücke handeln, weche dieselbe Bearbeitung in einer Maschine erfahren sollen und von welchen jedes auf einer der genannten Paletten befestigt ist. Es ist jedoch auch möglich, dass die erste Hilfspalette 100 zur Aufnahme eines bereits behandelten Werkstückes 104 bestimmt ist. Die zweite Palette 101 kann zur Aufnahme eines erst zu bearbeitenden Werkstückes 105 bestimmt sein. Die dritte Hilfspalette 102 kann zur Aufnahme eines Werkzeuges 106 bestimmt sein, das nicht mehr gebraucht wird, während die vierte Hilfspalette 103 ein Ersatzwerkzeug 107 tragen kann. Mit Hilfe der in der Bearbeitungsmaschine vorhandenen numerischen Steuerung kann die Bewegung der Grundpalette 1 so gesteuert werden, dass das bearbeitete Werkstück 104 durch das zu bearbeitende Werkstück 105 und das bisherige Werkzeug 106 durch das neue Werkzeug 107 ersetzt werden können. Entsprechendes trifft zu, wenn auf den Palette nur Werkstücke sind.

Fig. 11 zeigt die Palette 1, die zur Aufnahme der kleineren Paletten 100, 101, 102 und 103 aus Fig. 10 ausgebildet ist. Diese kleineren Paletten, können im wesentlichen gleich wie die zuerst beschriebene Palette 1 ausgebildet sein. Die Oberseite der in Fig. 11 dargestellten Palette 1 weist zwei parallel nebeneinander verlaufende Vorsprünge 120 und 121 auf, die so profiliert sind, dass sie in der Ausnehmung 20 einer der kleinen Palette 100, 101, 102 und 103 liegen können.

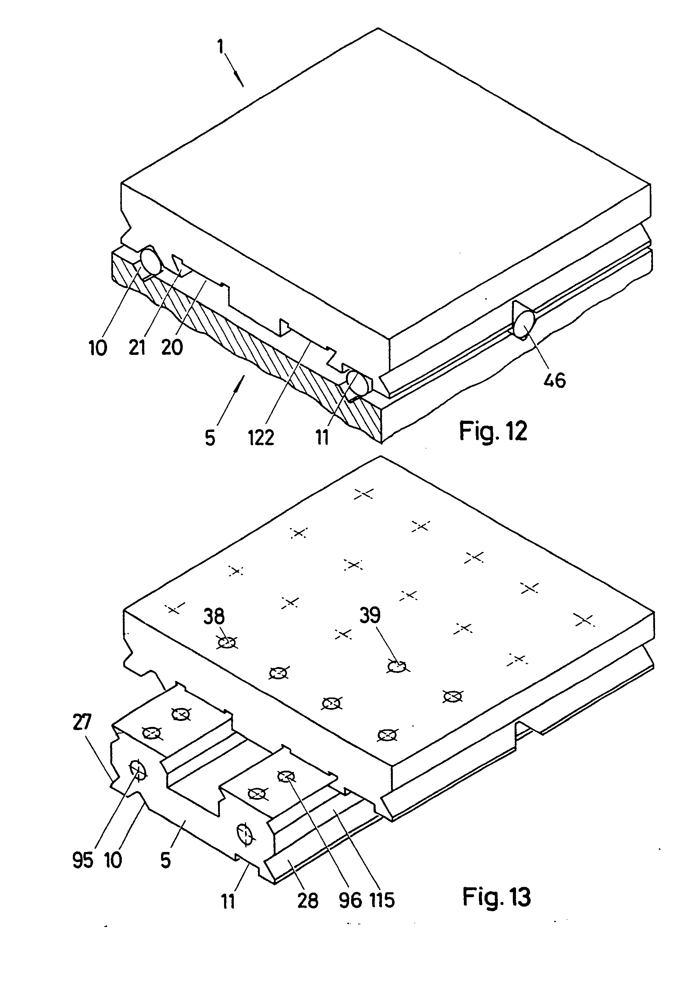

Fig. 12 zeigt eine Palette 1, deren Unterseiten mit zwei Ausnehmungen 20 und 122 versehen ist, wobei diese Ausnehmungen 20 und 122 sich zwischen den Rinnen 10 und 11 befinden. Die hinterschnittenen Seitenwände 21 dieser Ausnehmungen 20 und 122 liegen an der Aussenseite des genannten Paares der Ausnehmungen 20 und 122. Wie ersichtlich, ist die Unterlage 5 länger als die Palette 1 und die Lage der Palette 1 in der Längsrichtung der Rinnen 10 und 11 ist mit Hilfe des bereits beschriebenen Bolzens 46 festlegbar.

Die Palette 1 aus Fig. 12 ist in Fig. 13 auf einem Paar Balken 115 aufgesetzt. Der erste Balken ist so ausgebildet, wie dies im Zusammenhang mit den Fig. 8 und 9 beschrieben ist. Er weist den bereits besprochenen Längskanal 95 auf, der über die Querkanäle 96 im Balken an die Querkanäle 38 und somit auch an die Längskanäle 35 in der Palette 1 anschliessbar ist.

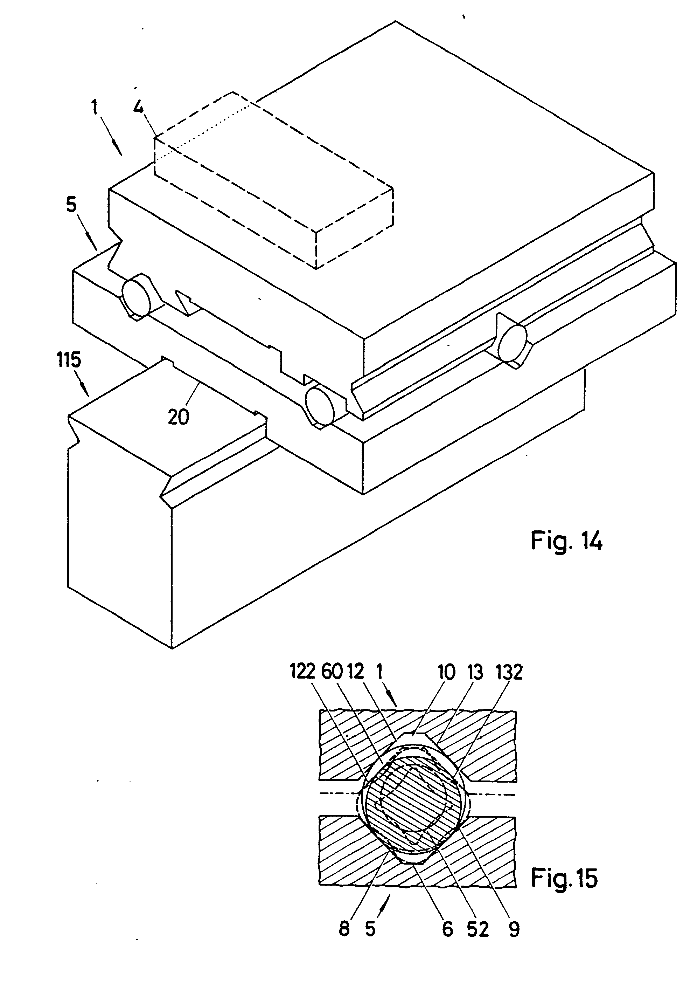

Die Einrichtung gemäss Fig. 14 weist eine platenförmige Unterlage 5 auf, die beispielsweise im Zusammenhang mit den Fig. 1 bis 3 beschrieben ist. Die Unterseite dieser Unterlage 5 ist jedoch mit der ebenfalls bereits beschriebenen Ausnehmung 20 zur Aufnahme eines entsprechend profilierten Abschnittes des Balkens 115 versehen. Es versteht sich, dass dieser Ausnehmung auch wenigstens eine Klinke usw. zugeordnet ist, obwohl solche Teile in Figur 14 nicht dargestellt sind. Eine solche Unterlage erweitert die Kombinationsmöglichkeiten der Teile der vorliegenden Einrichtung.

Die Darstellung von Fig. 15 entspricht der Darstellung von Fig. 5. In Fig. 15 ist die Palette 1 jedoch in ihrer unteren Lage dargestellt, und zwar durch eine strichpunktierte Linie. Die schrägen Seiten der Rinne 10 in der Palette 1 sind mit 122 und 132 bezeichnet und sie liegen auf dem Mantel der starren Walze 52 auf. Der nachgiebige Abschnitt 60 des Traggliedes ist dabei durch die Seitenwände der Rinnen 6 und 10 deformiert.

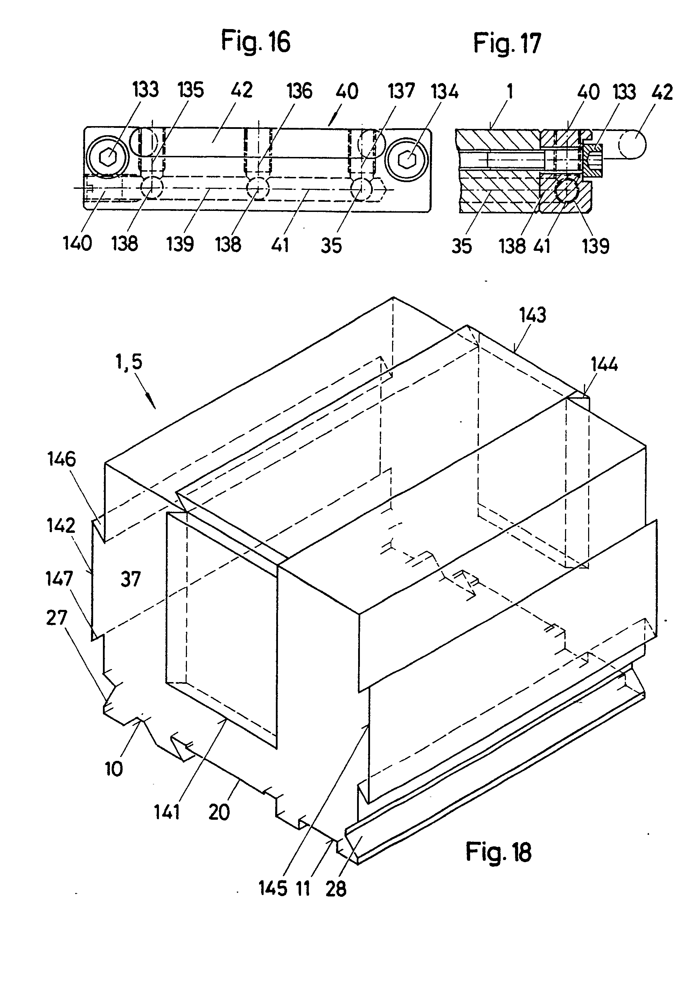

In den Fig. 16 und 17 ist die Spülleiste 40 aus Fig. 1 näher dargestellt, wobei Fig. 16 eine rückwärtige Ansicht und Fig. 17 einen vertikalen Schnitt durch die Spülleiste 40 zeigen. Seitlich vom Griff 42 (Fig. 16) befinden sich Befestigungsschrauben 133 und 134. die durch die Spülleiste 40 hindurchgehen und im Material der Palette 1 eingeschraubt sind. An den Umlenkkanal 41 in der Spülleiste 40 schliessen sich kurze Vertikalkanäle 135, 136 und 137 an, die in der Oberseite der Spülleiste 40 münden. Hier können Schläuche zur Verteilung der Spülflüssigkeit angeschlossen sein. Der U- bzw. E-förmige Umlenkkanal 41 entsteht dadurch, dass an die sich in der Spülleiste 40 befindlichen Fortsetzungen 138 der Kanäle 35 in der palette 1 ein Verbindungskanal 139 angeschlossen ist, der, wie in Fig. 16 dargestellt ist, in die linke Seitenwand der Spülleiste 40 mündet und mit einem Stopfen 140 verschlossen ist.

Die Palette 1 bzw. die Unterlage 5 kann jedoch auch als ein Würfel oder quaderförmig ausgebildet sein, wie dies aus Fig. 18 ersichtlich ist. Bei einer solchen Palette 1 sind die Oberflächen derselben mit flachen Vorsprüngen 141, 142, 143, 144 und 145 versehen. Die Seitenwände 146 und 147 solcher Vorsprünge 141, 142, 143, 144 und 145 sind unterschnitten, so dass die bereits beschriebenen flachen Ausnehmungen 20 an weiteren Paletten, Unterlagen oder Hilfsvorrichtungen mit den genannten Vorsprüngen in Eingriff stehen können. Die Folge davon ist, dass diese Teile praktisch jede gewünschte räumliche Lage einnehmen können. Ausserdem kann die Palette mit einem Werkstück an verschiedenen Vorsprüngen desselben Würfels angebracht sein. Dies ermöglicht die Bearbeitung mehrerer Seiten desselben Werkstückes nach einer bloss einmal durchgeführten Positionierung desselben auf der Palette. Die erwähnten Hilfsvorrichtungen sind beispielsweise in einer Patentanmeldung desselben Anmelders, der nachveröffentlichten EP-A-0,149,429, offenbart.

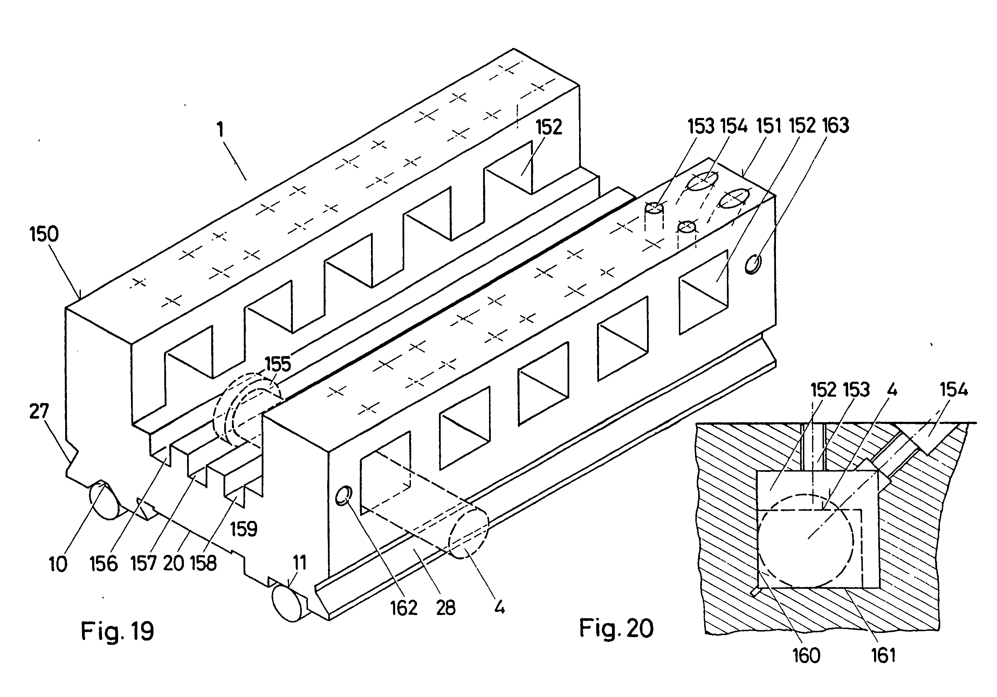

Ferner kann die Palette 1 einen in einem vertikalen Schnitt im wesentlichen U-förmigen Querschnitt aufweisen (Fig. 19 und 20). Die Schenkelpartien 150 und 151 einer solchen Palette 1 sind mit horizontal verlaufenden und nebeneinander liegenden Oeffnungen 152 versehen. Diese Oeffnungen 152 weisen eine quadratische Form auf. Die einander gegenüberliegenden Oeffnungen 152 in den Schenkelpartien 150 und 151 der Palette 1 fluchten miteinander. Die obere Partie der Schenkel 150 und 151 ist mit Paaren von senkrechten Gewindebohrungen 153 und von schräg verlaufenden Gewindebohrungen 154 ausgeführt (Fig. 20), in welchen Spannschrauben (nicht dargestellt) eingeschraubt sein können. Durch die Oeffnungen 152 kann ein stangenförmiges Werkstück 4 hindurchgesteckt werden. Das in Fig. 19 dargestellte Werkstück 4 weist eine scheibenförmige Erweiterung 155 auf, die in einer von Queranschlagnuten 156, 157 und 158 liegt. welche in der Oberseite der Bodenpartie 159 der Palette 1 ausgeführt sind.

Die Seitenflächen der Schenkelpartien 150 und 151 sind mit Gewindelöchern 162 und 163 versehen, in welchen Schrauben zur Halterung von Anschlagsleisten (nicht dargestellt) an den Schenkelpartien eingeschraubt sein können.

In Fig. 20 ist es angedeutet, dass das Werkstück 4, das auch einen anderen als runden Querschnitt aufweisen kann, mit Hilfe der sich in den schräg verlaufenden Bohrungen 154 befindlichen Schrauben gegen die gegenüberliegenden und unter einem rechten Winkel zueinander stehenden Flächen 160 und 161 der Oeffnung 152 angedrückt werden, wodurch das Werkstück 4 genau positioniert wird. Durch das Anziehen der sich in den senkrechten Bohrungen 153 befindlichen Schrauben erreicht man eine feste Halterung des Werkstückes in einer solchen Palette 1. Die Bearbeitung des Werkstückes 4 kann nicht nur im zwischen den Schenkelpartien 150 und 151 liegenden Bereich sondern auch ausserhalb dieses Bereiches erfolgen.

**Patentansprüche**

1. Einrichtung zur Halterung eines Gegenstandes wie ein Werkstück oder Werkzeug, mit einer Unterlage (5), die in wenigstens einer Maschine für aufeinanderfolgende Bearbeitungsgänge des Gegenstandes vorgesehen ist, und einer Palette (1), auf welcher der Gegenstand (4) befestigbar ist und die auf der Unterlage (5) aufgestellt ist, wobei die Unterseite der Palette mit zur Aufnahme je eines länglichen Traggliedes (2, 3) ausgebildeten Längsrinnen (10, 11) versehen ist, dadurch gekennzeichnet, dass in der Palette (1) wenigstens zwei Längsrinnen (10, 11) nebeneinander und parallel zueinander angeordnet und mindestens zwei einander gegenüberliegende Seitenwände (17, 18) mit Furchen (27, 28) von im wesentlichen dreieckigem Querschnitt versehen sind.

2. Einrichtung nach Anspruch 1, dadurch gekennzeichnet, dass auch die Unterlage (5) Längsrinnen (6, 7) aufweist, die den Längsrinnen (10, 11) der Palette gegenüberliegen, und in der Palette (1) eine der Längsrinnen (11) einen rechteckigen Querschnitt und die andere Längsrinne (10) einen im wesentlichen dreieckigen oder trapezförmigen Querschnitt aufweist, während in der Unterlage (5) die beiden Längsrinnen (6, 7) einen dreieckigen oder trapezförmigen Querschnitt aufweisen, und dass die Palette unter Zwischenlage der Tragglieder auf die Unterlage aufgesetzt ist.

3. Einrichtung nach Anspruch 2, dadurch gekennzeichnet, dass die Unterseite der Palette (1) und die Unterlage (5) mit je einer Querrinne (45, 47) versehen sind, wobei diese Querrinnen einander gegenüber und senkrecht zu den Längsrinnen (6, 7, 10, 11) liegen und zwecks Aufnahme eines länglichen Zwischengliedes (47) mit einem im wesentlichen dreieckigen oder trapezförmigen Querschnitt ausgebildet sind.

4. Einrichtung nach Anspruch 1, dadurch gekennzeichnet, dass die Unterseite der Palette wenigstens eine mit wenigstens zwei Seitenwänden (21, 22) versehene längliche Ausnehmung (20) aufweist, wobei die eine Seitenwand (21) unterschnitten ist und die andere Seitenwand (22) auf wenigstens einem Abschnitt eine unterschnittene Partie (31) aufweist, und wobei die Längsrinnen (10, 11) ausserhalb des Bereiches der Ausnehmung (20) bzw. Ausnehmungen (20, 122) angeordnet sind, und dass die Unterlage (5) länglich und von im wesentlichen rechteckigem Querschnitt ist, zwei einander gegenüberliegende Seitenwände der Unterlage in ihrem oberen Randpartien mit je einer Furche (91, 92) von im wesentlichen dreieckigem Querschnitt versehen sind, und die in die Ausnehmung (20) ragenden unterschnittenen Partien (31) der Palette (1) in den Furchen (91, 92) liegen.

5. Einrichtung nach Anspruch 4, dadurch gekennzeichnet, dass die Palette (1) und/oder die Unterlage (5) zur Führung einer Flüssigkeit jeweilige Kanäle (35, 38; 95, 96) aufweisen, deren Mündungen auf gegenüberliegenden Seiten der Palette und der Unterlage paarweise übereinstimmen, und an einer Stirnseite (37) der Palette und/oder der Unterlage eine mit Umlenkkanälen (41) und gegebenenfalls einem Griff (42) versehene Spülleiste (40) anbringbar ist.

6. Einrichtung nach Anspruch 1, dadurch gekennzeichnet, dass die Oberseite der Unterlage (5) eine mit einer Seitenwand (81) versehene flache Ausnehmung (80) aufweist, wobei die Seitenwand auf wenigstens einem Abschnitt (82) unterschnitten ist und an einer der Seitenwand (81) gegenüberliegenden Partie (86, 87) der Ausnehmung mindestens ein Anschlag (86, 87) mit einer in die Ausnehmung ragenden Nase (82) angeordnet ist, die einer der Furchen (27, 28) der Palette (1) liegt.

7. Einrichtung nach Anspruch 1, dadurch gekennzeichnet, dass auf der Palette (1) wenigstens eines weitere Palette (100, 101, 102, 103) angeordnet ist, auf welcher der Gegenstand (4) befestigbar ist.

**Revendications**

1. Dispositif de fixation d'un objet tel qu'une pièce à usiner ou un outil, comprenant un support (5), prévu dans au moins une machine pour une succession d'opérations d'usinage de l'objet, et une palette (1) sur laquelle l'objet (4) peut être fixé, et qui est montée sur le support (5), la face inférieure de la palette comportant des rainures longitudinales (10, 11) réalisées pour recevoir, respectivement, un élément porteur longitudinal (2, 3), caractérisé en ce qu'au moins deux rainures longitudinales (10, 11) sont disposées de façon parallèle et l'une à côté de l'autre sur la palette (1), et en ce qu'au moins deux parois latérales opposées (17, 18) présentent des cannelures (27, 28) d'une section transversale essentiellement triangulaire.

2. Dispositif suivant la revendication 1, caractérisé en ce que le support (5) présente également des rainures longitudinales (6, 7) opposées aux rainures longitudinales (10, 11) de la palette, et en ce que dans la palette (1) l'une des rainures longitudinales (11) a une section transversale rectangulaire et l'autre rainure longitudinale (10) a une section transversale essentiellement triangulaire ou trapézoïdale, tandis que dans le support (5) les deux rainures longitudinales (6, 7) ont une section transversale triangulaire ou trapézoïdale, et en ce que la palette est montée sur le support en intercalant les éléments porteurs.

3. Dispositif suivant la revendication 2, caractérisé en ce que la face inférieure de la palette (1) et le support (5) comportent, respectivement, une rainure transversale (45, 47), ces dernières étant opposées et perpendiculaires aux rainures longitudinales (6, 7, 10, 11) et, pour recevoir un élément intermédiaire longitudinal (47), elles ont une section transversale essentiellement triangulaire ou trapézoïdale.

4. Dispositif suivant la revendication 1, caractérisé en ce que la face inférieure de la palette présente au moins un évidement longitudinal (20) ayant au moins deux parois latérales (21, 22), l'une des parois latérales (21) étant chanfreinée et l'autre paroi latérale (22) présente une partie chanfreinée (31) sur au moins une section, les rainures longitudinales (10, 11) étant disposées à l'extérieur de la zone de l'évidement (20) ou des évidements (20, 122), et en ce que le support (5) est longitudinal et présente une section transversale essentiellement rectangulaire, en ce que deux parois latérales opposées du support comportent dans leurs parties de bordures supérieures une cannelure (91, 92) respectivement d'une section transversale essentiellement triangulaire, et en ce que les parties chanfreinées (31) de la palette (1) en saillie dans l'évidement (20) sont situées dans les cannelures (91, 92).

5. Dispositif suivant la revendication 4, caractérisé en ce que la palette (1) et/ou le support (5) comportent des canaux (35, 38; 95, 96) destinés à l'écoulement d'un liquide, canaux dont les ouvertures coïncident par paires sur des faces opposées de la palette et du support, et en ce que sur une face frontale (37) de la palette et/ou du support on peut fixer un évidement pour le rinçage (40) muni de canaux de déviation (41) et, le cas échéant, d'une poignée (42).

6. Dispositif suivant la revendication 1, caractérisé en ce que la face supérieure du support (5) présente un évidement plat (80) comportant une paroi latérale (81), cette dernière étant chanfreinée sur au moins une section (82) et en ce que sur une partie (83) de l'évidement opposée à la paroi latérale (81) est prévue au moins une butée (86, 87) comportant un nez (82) en saillie dans l'évidement, dans l'une des cannelures (27, 28) de la palette (1).

7. Dispositif suivant la revendication 1, caractérisé en ce que sur la palette (1) est disposée au moins une palette supplémentaire (100, 101, 102, 103) sur laquelle l'objet (4) peut être fixé.

**Claims**

1. A device for holding an object like a workpiece or tool, with a base (5), which is provided in at least one machine for successive machining stages of the object, and a pallet (1) on which the object (4) is securable and which is mounted on the base (5), wherein the lower side of the pallet is provided with elongated grooves (10, 11) designed for accommodating in each case a longitudinal supporting member (2, 3), characterised in that in the pallet (1) at least two longitudinal grooves (10, 11) are arranged next to each other and parallel to each other and at least two side walls (17, 18), opposing each other, are provided with furrows (27, 28) of a substantially triangular cross section.

2. A device according to claim 1, characterised in that the base (5) also has longitudinal grooves (6, 7), which are opposite the longitudinal grooves (10, 11) of the pallet and in the pallet (1) one of the longitudinal grooves (11) has a rectangular cross-section and the other longitudinal groove (10) has a substantially triangular or trapezoidal cross-section, whilst in the base (5) both longitudinal grooves (6, 7) have a triangular or trapezoidal cross-section and in that the pallet is placed below an intermediate layer of the supporting members on the base.

3. A device according to claim 2, characterised in that the lower side of the pallet (1) and the base (5) are provided in each case with a transverse groove (45, 47), wherein these transverse grooves lie opposite each other and perpendicular to the longitudinal grooves (6, 7, 10, 11) and, for the purpose of accommodating an elongated intermediate member (47), are designed with a substantially triangular or trapezoidal cross-section.

4. A device according to claim 1, characterised in that the lower side of the pallet has at least one elongated recess (20) provided with at least two side walls (21, 22), wherein the one side wall (21) is undercut and the other side wall (22) has on at least one section an undercut section (31) and wherein the longitudinal grooves (10, 11) are arranged outside the region of the recess (20) or recesses (20, 122) and in that the base (5) is elongated and has a substantially rectangular cross-section, two side walls of the base lying opposite each other are provided in their upper edge sections in each case with a furrow (91, 92) of a substantially triangular cross-section, and the undercut sections (31) of the pallet (1) projecting into the recess (20) lie in the furrows (91, 92).

5. A device according to claim 4, characterised in that the pallet (1) and/or the base (5) have respective channels (35, 38; 95, 96) for guiding a liquid, the mouths of which on opposing sides of the pallet and of the base correspond in pairs, and a rinsing ledge (40) provided with guiding channels (41) and possibly a handle (42) is able to be attached to one end side (37) of the pallet and/or the base.

6. A device according to claim 1, characterised in that the upper side of the base (5) has a flat recess (80) provided with a side wall (81), wherein the side wall is undercut on at least one section (82) and arranged on one section (86, 87) of the recess, opposing the side wall (81), there is at least one stop (86, 87) with a lug (82) projecting into the recess, which lies in one of the furrows (27, 28) of the pallet (1).

7. A device according to claim 1, characterised in that on the pallet (1) at least one further pallet (100, 101, 102, 103) is arranged on which the object (4) is securable.

**Fig. 1**

**Fig. 2**

**Fig. 3**

**Fig. 4**

**Fig. 5**

Fig. 6

Fig. 7

EP 0 180 866 B1

VIII-VIII

Fig. 8

Fig. 9

4

104    100         105    101

1

106    102         103    107

Fig. 10

120         1         121         11

10

27                             28

20

Fig. 11

1

10  21  20

5  122  11

46

**Fig. 12**

38  39

27

95 10  5

11  28  96 115

**Fig. 13**

Fig. 14

Fig. 15

## Fig. 16

133  135  42  136  40  137  134

140  138  139  138  41  35

## Fig. 17

1  40  133  42

35  138  41  139

1,5

143

144

146

142

147

27

37

10

141  20

145  11  28

## Fig. 18

8

Fig. 19

Fig. 20